# EUROPÄISCHE PATENTSCHRIFT

(11) **EP 0 501 040 B1**
(45) Veröffentlichungstag und Bekanntmachung des Hinweises auf die Patenterteilung: **22.02.1995**
(21) Anmeldenummer: 91122140.6
(22) Anmeldetag: 23.12.1991
(51) Int. Cl.: B62D 25/20, B62D 43/10

(54) **Boden eines Fahrzeuginnenraums mit wenigstens einem Bereich aus bruchgefährdetem Material**
Floor for the interior of a motor vehicle, at least partially made of fracture-prone material
Plancher d'habitacle de véhicule, dont au moins une partie consiste d'un matériau à zone de rupture

(30) Priorität: 01.03.1991 DE 4106506
(43) Veröffentlichungstag der Anmeldung: 02.09.1992
(73) Patentinhaber: AUDI AG, 85002 Ingolstadt (DE)
(72) Erfinder: Krebs, Bernd, W-8071 Wettstetten (DE)
(74) Vertreter: Engelhardt, Harald

(56) Entgegenhaltungen:
- EP-A- 0 062 925
- DE-A- 3 035 644
- DE-A- 3 627 485
- GB-A- 2 099 963

## Beschreibung

Die Erfindung betrifft einen Boden eines Fahrzeuginnenraums mit wenigstens einem Bereich aus bruchgefährdetem Material nach dem Oberbegriff des Anspruchs 1.

Bei bekannten Fahrzeugkarosserien wird der Boden im Bereich des Fahrzeuginnenraums aus tiefgezogenen Bodenblechen hergestellt und verschweißt. Bei einem Unfall mit einem Fahrzeugaufprall werden Teile des Fahrzeugs verformt, wobei auch diese Bodenbleche verformt werden können. Aufgrund der Biegsamkeit des verwendeten Blechmaterials besteht aber kaum die Gefahr, daß bei einer Verformung Risse oder Brüche im Bodenbereich entstehen und somit ein Durchgang und eine größere, undichte Rißstelle vom Fahrzeuginnenraum zur Fahrzeugaußenseite hin entsteht.

Bei modernen Karosserien werden jedoch in zunehmendem Maße auch Teile des Fahrzeugbodens aus bruchgefährdetem Material, insbesondere aus Kunststoffmaterial, verwendet:

In einer bekannten Karosserieausführung (EP-A-0 333 267) besteht der Fahrzeugboden im Bereich des Heckladeraums und der Rücksitze aus zwei übereinander liegenden Kunststoffschalen, zwischen denen ein Aufnahmeabteil, z. B. zur Aufnahme eines Reserverades, gebildet ist.

In einer weiter bekannten Karosserieausführung für ein Kombifahrzeug besteht der Boden im Heckladebereich ebenfalls aus einer Kunststoffplatte mit einer eingeformten Reserveradmulde und einer daneben liegenden Mulde zur Aufnahme des Kraftstofftanks.

Zudem ist es bekannt, bei Kombifahrzeugen eine Zusatzsitzbank im Fond anzubringen, die meist gegen die Fahrtrichtung angeordnet ist. Zur Aufnahme der Füße von Fahrzeuginsassen auf einer solchen Zusatzsitzbank sind in einem Fahrzeugboden aus Bodenblechen Mulden aus Kunststoff eingelassen, die ggfs. auch zur Aufnahme eines Reserverads dienen können.

Übliche Kunststoffe sind bekanntlich nur wenig biegsam und bruchgefährdet, so daß bei einem stärkeren Aufprall die Gefahr besteht, daß durch Risse und Brüche ein Durchgang und eine Verbindung vom Fahrzeuginnenraum zur Fahrzeugaußenseite hin entsteht. Dies kann zur Folge haben, daß brennbare Gase, insbesondere wenn auch der meist im Heckbereich angeordnete Fahrzeugtank beschädigt ist, in den Fahrzeuginnenraum durch die gebrochenen und aufgerissenen Kunststoffteile eindringen können und dann die Gefahr eines Brandes im Fahrzeuginnenraum besteht.

Diese Gefahr besteht auch dann, wenn diese Kunststoffteile mit einer üblichen Teppichbodenabdeckung belegt sind, da sol che Abdeckungen in Mulden meist nur lose eingelegt und damit nicht dicht angebracht sind oder so wenig dehnintensiv ausgeführt sind, daß sie an den Bruchstellen mit aufreißen.

In einer bekannten Ausgestaltung einer Reserveradmulde bei einem Blechaufbau (DE-A-3 247 979) wird das vordere Ende der Mulde und damit ein Teil des Reserverads von einem Fangblech überspannt. Dadurch soll eine starke Verformung des hinteren Bodenblechs über die Felge des Reserverads an einem Querträger abgestützt und damit ein im Heckbereich angeordneter Kraftstofftank vor einer Beschädigung geschützt werden. Eine Bruchgefahr, beispielsweise bei Verwendung einer Kunststoffreserveradmulde, wird jedoch auch bei einer solchen Konstruktion nicht vermindert.

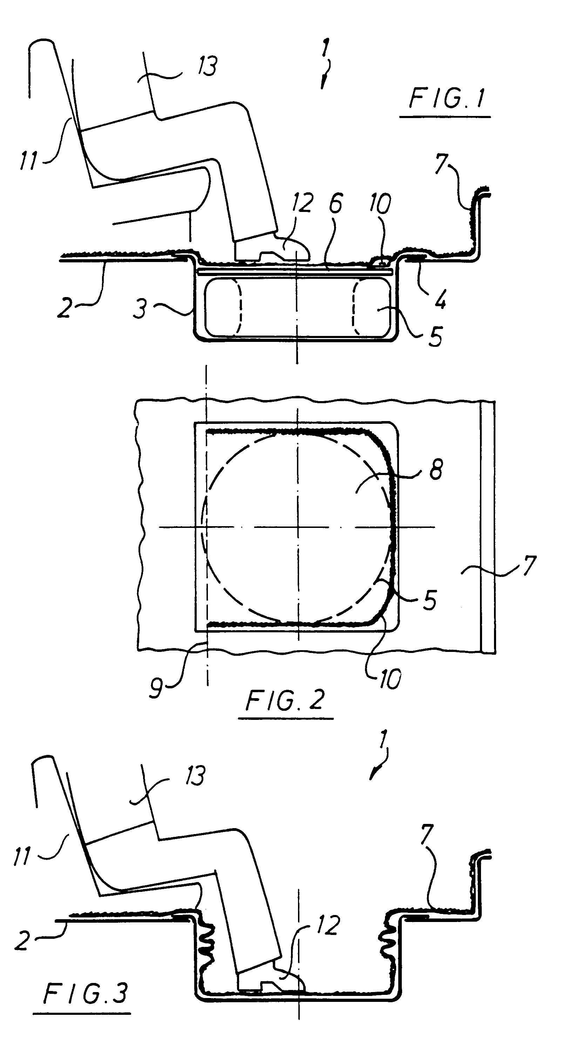

Eine bekannte Reserveradmulde (DE-C-3 430 826) ist in ihrer Tiefe veränderbar gestaltet zur Aufnahme entweder eines schmalen Notrades oder eines üblicherweise breiteren Normalrades. Dazu kann der Boden der Reserveradmulde mit Hilfe einer Vorrichtung abgesenkt werden. Um eine dichte Verbindung zwischen dem festen Boden der Reserveradmulde und dem Kofferraumboden herzustellen, ist ein Faltenbalg vorgesehen (Fig. 2). Auch mit einer solchen Konstruktion besteht bei Verwendung von Kunststoff die Gefahr von Brüchen und Rissen und damit die Gefahr, daß brennbare Gase in den Fahrzeuginnenraum eindringen können.

Eine weiter gemäß dem Oberbegriff des Anspruchs 1 bekannte Bodenkonstruktion eines Fahrzeuginnenraums (DE-A-3 035 644) besteht im Heckteil aus bruchgefährdetem Material aus Polypropylen. Zur Abdeckung einer in dieses Heckteil eingeformten Reserveradmulde ist ein Deckel vorgesehen, der ebenfalls aus Polypropylen besteht. Die dargelegte Aufgabe der leichten Verformbarkeit der außerhalb der Fahrgastzelle liegenden Bodengruppe bei Unfällen wird dadurch gelöst, daß durch die Verwendung von Polypropylen für das Heckteil dieses im Sinne eines Unfallschutzes zur Aufnahme von Aufprallenergie verformbar ist. Die Reserveradmulde und deren Deckel sind damit aus dem gleichen Material, Polypropylen, hergestellt. Es besteht daher bei einem Aufprall sowohl für die Reserveradmulde als auch für den Deckel die gleiche Bruch- und Rißgefährdung. Bei dem dargestellten Ausführungsbeispiel liegt der Deckel am Muldenrand in einer Sicke. Bei einer Verformung der Reserveradmulde wird durch die Abstützung des Deckels in der Sicke die Verformkraft voll übertragen und dieser ist somit entsprechend der Reserveradmulde bruchgefährdet. Außerdem kann der Deckel durch seine lose Auflage von der Reserveradmulde infolge eines Aufpralls wegbewegt werden und ein Riß oder Bruch nur im Muldenbereich bleibt dann nicht abgedeckt. Der Deckel ist wie der übrige Bodenbereich nicht dehnintensiv, da aus Stabilitätsgründen eine gewisse Festigkeit des Materials gefordert ist. Der Deckel ist durch seine lose Auflage nur wenig gasdicht und auch wegen der gleichen Materialbeschaffenheit wie der übrige Bodenbereich nicht reißfester als dieser.

Aufgabe der Erfindung ist es, einen Fahrzeuginnenraum mit einem Bodenbereich aus bruchgefährdetem Material für die Fahrzeuginsassen sicherer zu gestalten.

Diese Aufgabe wird mit den kennzeichnenden Merkmalen des Anspruchs 1 gelöst.

Gemäß Anspruch 1 ist der Boden im bruchgefährdeten Bereich einstückig durch eine dehnintensive, weitgehend gasdichte und reißfeste Abdeckung überdeckt. Diese Abdeckung ist umlaufend am, den bruchgefährdeten Bereich umgebenden Seitenbereiche im Fahrzeug fixiert.

Wenn nun in Folge eines Aufpralls und einer damit verbundenen Belastung und Verformung des Fahrzeugbodens ein Bruch oder Riß im bruchgefährdeten Bodenbereich auftritt, wird eine Verlagerung von Teilen von der dehnintensiven Abdeckung mitvollzogen, ohne daß diese jedoch ebenfalls reißt. Ein Bruch oder Riß im bruchgefährdeten Bodenbereich geht somit nicht bis zum Fahrzeuginnenraum durch, so daß brennbare Gase, die beispielsweise bei einer zusätzlichen Beschädigung des Fahrzeugtanks auftreten können, nicht in den Fahrzeuginnenraum gelangen können. Zudem treten im Fahrzeug keine scharfen Bruchkanten auf, da diese von der Abdeckung überdeckt und entschärft sind. An die Gasdichtheit der Abdeckung sind keine hohen Anforderungen zu stellen, da auftretende Gase ohne Druck anstehen und es somit für eine Abdichtung ausreicht, wenn eine Gasströmung durch einen Riß nicht über die gesamte Rißbreite zustande kommt.

Durch die Abdeckung von scharfen Bruchkanten und die Unterbindung des Eindringens von brennbaren Gasen in den Fahrzeuginnenraum wird dieser für Fahrzeuginsassen insgesamt sicherer.

Die erfindungsgemäße Abdeckung ist nach Anspruch 2 besonders vorteilhaft bei an sich bekannten Kunststoffschalen als Kunststoffboden im Heckbereich eines Fahrzeugs einsetzbar. Nach Anspruch 3 wird die besondere Gefährdung durch einen Heckaufprall bei einem Kombifahrzeug reduziert. Die dort in an sich bekannter Weise eingesetzten Kunststoffschalen dienen als Reserveradmulde zur Aufnahme eines Reserverads und/oder als Fußmulde zur Aufnahme der Füße von Fahrzeuginsassen, die auf einer Zusatzsitzbank entgegen der Fahrtrichtung sitzen. Eine besondere Gefährdung tritt hier dadurch auf, daß in diesem Bereich auch üblicherweise der Fahrzeugtank angebracht ist bzw. bei einer Fahrzeug/Fahrzeug-Kollision häufig der evtl. Kraftstoff beinhaltende, deformierte Motorraum des Unfallkontrahenten in unmittelbarer Nähe ist.

Die erforderliche Dehnintensität der Abdeckung kann bereits im Material realisiert sein. In einer alternativen Ausführung nach Anspruch 4, die eine besonders große Überbrückung von Brüchen und Rissen ermöglicht, werden Dehnfalten vorgeschlagen. Solche Dehnfalten sind bevorzugt im Bereich der Seitenwände einer Mulde anzuordnen.

Die Abdeckung ist nach Anspruch 5 vorteilhaft als Teppichboden auszuführen, so daß damit das an sich bekannte, angenehme Erscheinungsbild des Fahrzeuginnenraums auch mit der erfindungsgemäßen Abdeckung zu verwirklichen ist.

In einer bekannten Bodenkonstruktion wird in einen Ausschnitt der Bodenbleche eine Kunststoffschale als Reserveradmulde eingesetzt. Diese Schale dient zur Aufnahme des Reserverads, das mit einer Platte, etwa in der Höhe des übrigen Bodens, abgedeckt ist. Um auch hier eine erfindungsgemäße Abdeckung vornehmen zu können, wird in einer bevorzugten Ausführungsform nach Anspruch 6 die Abdeckung im Bereich der Reserveradmulde mit einem Ausschnitt versehen, der bevorzugt als aufklappbarer Lappen ausgeführt ist. Dieser Ausschnitt ist mit Hilfe einer gut kraftübertragenden Verbindung, bevorzugt mit einem Reißverschluß, verschließbar. Damit ist auch hier eine durchgehende, erfindungsgemäße Abdeckung erreicht. Ähnlich kann eine aufklappbare Abdeckung für andere Aufnahmeabteile aus Kunststoff, beispielsweise zur Aufnahme eines Warndreiecks, eines Wagenhebers, etc., durchgeführt werden.

Anhand einer Zeichnung werden zwei Ausführungsformen der Erfindung mit weiteren Einzelheiten, Merkmalen und Vorteilen näher erläutert.

Es zeigen
- Fig. 1: einen Längsschnitt durch ein Fahrzeug im Heckladebereich eines Kombifahrzeugs mit einer Reserveradmulde und einer entgegen der Fahrtrichtung angeordneten Zusatzsitzbank,
- Fig. 2: eine Draufsicht auf den Bereich der Reserveradmulde nach Fig. 1,
- Fig. 3: einen Längsschnitt im Heckladebereich eines Fahrzeugs mit einer Fußmulde und einer entgegen der Fahrtrichtung angebrachten Zusatzsitzbank.

In Fig. 1 ist ein Längsschnitt im Heckladebereich 1 eines Fahrzeugs dargestellt, wobei in einem Ausschnitt eines Bodenblechs 2 eine Kunststoffschale als Reserveradmulde 3 eingesetzt und mit den Randbereichen 4 dicht verbunden, insbesondere verklebt, ist. In der Reserveradmulde 3 liegt ein Reserverad 5, das durch eine Platte 6 abgedeckt ist. Über dem Bodenblech 2 und der Platte 6 liegt ein Teppichboden 7, der als dehnintensive, weitgehend gasdichte und reißfeste Abdeckung ausgeführt ist.

In der Draufsicht nach Fig. 2 auf die Reserveradmulde 3 ist zu erkennen, daß der Teppichboden 7 einen Ausschnitt in der Form eines Lappens 8 aufweist, der um eine Achse 9, wo er mit dem übrigen Teppichboden 7 fest verbunden ist, aufgeklappt werden kann. Der Lappen 8 ist dabei so groß, daß im aufgeklappten Zustand das Reserverad 5 bequem eingeführt oder entnommen werden kann.

Um eine feste und möglichst gasdichte Verbindung des Lappens 8 mit dem übrigen Teppichboden 7 zu erhalten, ist ein am Lappenrand umlaufender Reißverschluß 10 vorgesehen, mit dem der Teppichbodenausschnitt wieder fest verschließbar ist.

Im vorliegenden Ausführungsbeispiel ist im Heckladebereich des Kombifahrzeugs zudem eine Zusatzsitzbank 11 entgegen der Fahrtrichtung angeordnet. Die Füße 12 eines Insassen 13 stehen hier auf der Platte 6 über der Reserveradmulde.

In einer anderen Ausführungsform nach Fig. 3 ist ebenfalls eine Zusatzsitzbank 11 im Heckladebereich 1 eines Kombifahrzeugs vorgesehen, die jedoch gegenüber dem Fahrzeugboden bzw Bodenblech 2 insgesamt tiefer angebracht ist. Die Füße 12 des Insassen 13 sind hier in einer Fußmulde 14 abgestellt. Diese Fußmulde 14 ist ähnlich wie die Reserveradmulde 3 aus dem Ausführungsbeispiel nach Fig. 1 und 2 aus Kunststoff gefertigt, in einen Ausschnitt des Bodenblechs 2 eingesetzt und dicht befestigt. Der Teppichboden 7 ist hier in die Fußmulde 14 hineingezogen, wobei im Seitenbereich der Fußmulde 14 Dehnfalten 15 angebracht sind. Der Teppichboden kann im Bereich der Fußmulde als Teil mit einer Reißverschlußverbindung eingesetzt sein.

Die dargestellten Ausführungsformen haben folgende Funktion:
Die Reserveradmulde 3 bzw. die Fußmulde 14 bestehen aus Kunststoff und sind daher bei größerer Belastung bruchgefährdet. Wenn bei einem Aufprall, insbesondere einem Heckaufprall, eine solche Kunststoffmulde bricht, wird wegen der dehnintensiven, weitgehend gasdichten und reißfesten Abdeckung durch den entsprechend ausgeführten und dimensionierten Teppichboden 7 bzw. den Lappen 8 keine unmittelbare Verbindung zwischen dem Fahrzeuginnenraum und dem Außenraum geschaffen. Im Außenraum befindliche Gase, insbesondere brennbare Treibstoffgase aus einem beschädigten, benachbarten Treibstofftank, können somit nicht in den Fahrzeuginnenraum eindringen. Eine besonders weite Überbrückung von möglichen Bruchstellen und Rissen wird mit den Dehnfalten 15 erreicht. Zudem werden ggfs. scharfe Bruchkanten vom Teppichboden 7 bzw. dem Lappen 8 abgedeckt, so daß eine davon ausgehende Verletzungsgefahr für die Fahrzeuginsassen wesentlich reduziert wird.

## Patentansprüche

1. Boden eines Fahrzeuginnenraums mit wenigstens einem Bereich aus bruchgefährdetem Material,
wobei dieser bruchgefährdete Bereich von einem Seitenbereich aus weniger bruchgefährdetem Material umgeben ist,
dadurch gekennzeichnet,
daß der Boden im bruchgefährdeten Bereich (Reserveradmulde 3; Fußmulde 14) einstückig durch eine dehnintensive, weitgehend gasdichte und reißfeste Abdeckung (Teppichboden 7; Lappen 8) überdeckt ist und
daß die Abdeckung (7; 8) umlaufend am, den bruchgefährdeten Bereich (3; 4) umgebenden Seitenbereich im Fahrzeug fixiert ist.

2. Boden nach Anspruch 1, dadurch gekennzeichnet, daß der Bereich aus bruchgefährdetem Material eine Kunststoffschale (Reserveradmulde 3; Fußmulde 14) als Kunststoffboden im Heckbereich ist.

3. Boden nach Anspruch 2, dadurch gekennzeichnet, daß die Kunststoffschale eine Mulde im Heckladebereich (1) eines Kombifahrzeugs ist, die als Reserveradmulde (3) zur Aufnahme eines Reserverads (5) und/oder als Fußmulde (14) zur Aufnahme der Füße (12) von Fahrzeuginsassen (13) dient.

4. Boden nach einem der Ansprüche 1 bis 3, dadurch gekennzeichnet, daß die Dehnintensität durch Dehnfalten (15) in der Abdeckung (Teppichboden 7), insbesondere durch Dehnfalten (15) im Bereich der Seitenwände einer Mulde (Fußmulde 14) hergestellt ist.

5. Boden nach einem der Ansprüche 1 bis 4, dadurch gekennzeichnet, daß die Abdeckung als Teppichboden (7) ausgeführt ist.

6. Boden nach einem der Ansprüche 1 bis 5, dadurch gekennzeichnet, daß die Abdeckung (Teppichboden 7) im Bereich einer Reserveradmulde (3) einen Ausschnitt, insbesondere als aufklappbaren Lappen (8), enthält und der Ausschnitt mit Hilfe eines Reißverschlusses verschließbar ist.

## Claims

1. Floor of a vehicle interior having at least one area consisting of material at risk of fracture,
said region at risk of fracture being surrounded by a lateral area consisting of material less at risk of fracture,
characterised in that
the floor in the area at risk of fracture (spare wheel well 3; foot well 14) is covered integrally with a high-stretch, largely vapour-proof and tear-resistant covering (carpet 7; patch 8) and that
the covering (7; 8) is fixed in position in the vehicle, around the lateral area surrounding the area (3; 4) at risk of fracture.

2. Floor according to claim 1, characterised in that the area of material at risk of fracture is a plastics dish (spare wheel well 3; foot well 14) forming a plastics floor in the rearward area.

3. Floor according to claim 2, characterised in that the plastics dish is a well in the rearward loading area (1) of a station wagon, said well serving as a spare wheel well (3) for accommodating a spare wheel (5) and/or as a foot well (14) for accommodating the feet (12) of vehicle occupants (13).

4. Floor according to any of claims 1 to 3, characterised in that the high stretching ability is provided by expansion folds (15) in the covering (carpet 7), more particularly expansion folds (15) in the area of the side walls of a well (foot well 14).

5. Floor according to any of claims 1 to 4, characterised in that the covering is designed as a carpet (7).

6. Floor according to any of claims 1 to 5, characterised in that in the area of a spare wheel well (3) the covering (carpet 7) contains a cutout, more particularly in the form of a patch (8) adapted to be raised and folded back, and the cutout can be closed with the help of a zipper.

## Revendications

1. Plancher d'habitacle de véhicule, dont une partie au moins est faite d'un matérieau susceptible de rupture,
cette partie susceptible de rupture étant entourée d'une partie latérale en un matériau moins exposé à la rupture,
caractérise en ce que
dans la partie susceptible de rupture (cuvette 3 pour roue de secours; cuvette 14 pour les pieds), le plancher est recouvert d'un seul tenant d'un revêtement fortement extensible, étanche aux gaz dans une large mesure et résistant a la déchirure (tapis de sol 7; volet de tissu 8) et
le revêtement (7; 8) est fixé tout autour à ladite partie latérale du véhicule qui entoure la partie susceptible de rupture (3; 4).

2. Plancher selon la revendication 1, caractérisé en ce que la partie en matériau susceptible de rupture est une coque en matière plastique (cuvette 3 pour roue de secours; cuvette 14 pour les pieds) constituant un plancher en matière plastique dans la région arrière.

3. Plancher selon la revendication 2, caractérisé en ce que la coque en matière plastique est une cuvette dans la région de chargement arrière (1) d'un break, servant de cuvette (3) pour recevoir une roue de secours (5) et/ou de cuvette (14) pour les pieds pour recevoir les pieds (12) d'occupants (13) du véhicule.

4. Plancher selon l'une quelconque des revendications 1 à 3, caractérisé en ce que la forte extensibilité est produite par des plis d'extension (15) dans le revêtement (tapis de sol 7), en particulier par des plis d'extension (15) dans la région des parois latérales d'une cuvette (cuvette 14 pour les pieds).

5. Plancher selon l'une quelconque des revendications 1 à 4, caractérisé en ce que le revêtement est réalisé sous forme de tapis de sol (7).

6. Plancher selon l'une quelconque des revendications 1 à 5, caractérisé en ce que le revêtement (tapis de sol 7) contient, dans la région d'une cuvette (3) pour roue de secours, une partie découpée, en particulier sous forme d'un volet de tissu relevable, et en ce que la partie découpée peut être fermée au moyen d'une fermeture à glissière.
